# EUROPEAN PATENT SPECIFICATION

(11) **EP 1 009 163 B1**
(45) Date of publication and mention of the grant of the patent: **19.07.2006**
(21) Application number: 99309435.8
(22) Date of filing: 25.11.1999
(51) Int. Cl.: H04N 5/52, H03G 1/00, H04N 5/44

(54) **Digital television signal receiving tuner**
Digitaler Fernsehsignalempfangstuner
Circuit d' accord pour la réception de signaux de télévision numérique

(30) Priority: 10.12.1998 JP 35096998
(43) Date of publication of application: 14.06.2000
(73) Proprietor: ALPS ELECTRIC CO., LTD., Ota-ku Tokyo 145 (JP)
(72) Inventor: Isobe, Masaharu, C/o Alps Electric Co., Ltd., Ota-ku, Tokyo 145 (JP)
(74) Representative: Kensett, John Hinton

(56) References cited:
- EP-A- 0 573 073
- EP-A- 0 929 149
- GB-A- 1 362 618
- US-A- 3 619 786
- US-A- 4 340 975
- US-A- 4 654 610
- US-A- 5 347 239
- US-A- 5 374 895
- US-A- 5 483 209
- US-A- 5 603 114

## Description

The present invention relates to digital television signal receiving tuners for receiving digital television signals digitally modulated in a modulation format such as quadrature phase shift keying (QPSK) and transmitted from broadcasting satellites.

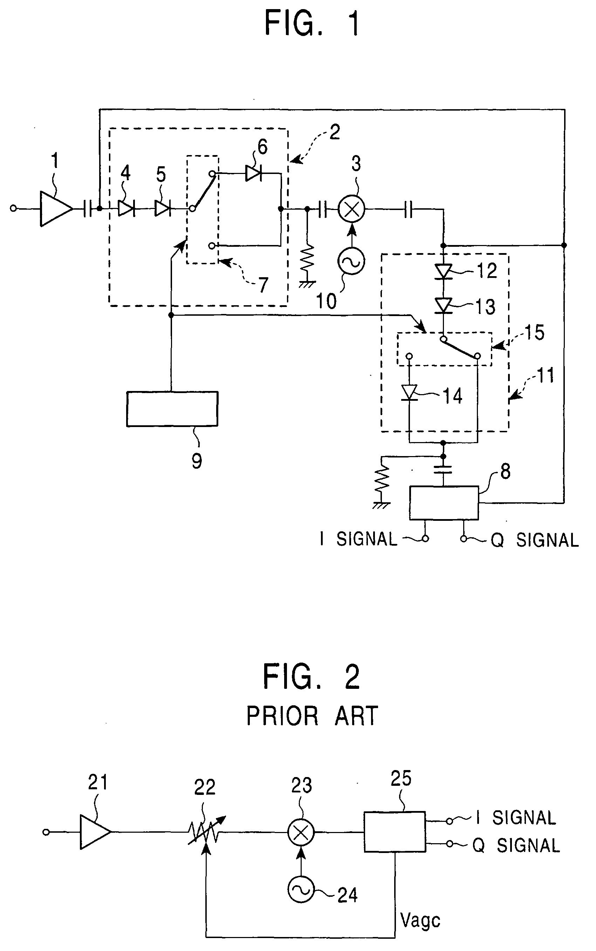

Referring to Fig. 2, a construction and an operation of a conventional digital television signal receiving tuner is described. A digital television signal received by an outdoor parabolic antenna (not shown) is frequency-converted by a converter (not shown) installed outside, which in turn is input to the digital television signal receiving tuner.

The digital television signal input to the digital television signal receiving tuner is amplified by an amplifier 21 and input through a variable attenuator 22 into a mixer 23. The variable attenuator 22 is controlled to attenuate the digital television signal so that the level of the signal to be input into the mixer 23 is maintained approximately constant.

The digital television signal input into the mixer 23 is mixed with a local oscillation signal from a local oscillator 24 to be frequency-converted into an intermediate frequency signal, which in turn is input into a demodulator 25.

The demodulator 25 demodulates the digital television signal and outputs two digital signals (I signal and Q signal) of different phases. Simultaneously, an automatic gain control voltage (hereinafter referred to as an "AGC voltage") VAGC is output. The AGC voltage VAGC corresponds to the level of the received digital television signal. The AGC voltage VAGC is input to the variable attenuator 22.

If the level of the received digital television signal is high, the variable attenuator 22 attenuates the signal to a large extent; if the level of the received digital television signal is low, the variable attenuator 22 attenuates the signal to a lesser extent. As a result, the level of the digital television signal to be input into the mixer 23 is maintained constant. Document EP 0 929 149 A describes such a digital television signal receiving tuner.

There are two types of digital television signals which may be transmitted. One is a low-bit-rate digital television signal (for example, the bit rate is not more than 40 Mbps) and the other is a high-bit-rate digital television signal (for example, the bit rate is not less than 40 Mbps).

It is the transmitter which determines whether the digital television signal to be transmitted is a low-bit-rate digital television signal or a high-bit-rate digital television signal.

When transmitting television signals having the same amount of data, the amount of data transmitted per unit time is lesser for the low-bit-rate digital television signal than for the high-bit-rate digital television signal.

Conversely, the amount of data transmitted per unit time is greater for the high-bit-rate digital television signal than for the low-bit-rate digital television signal.

The low-bit-rate digital television signal has a narrower signal band compared with the high-bit-rate digital television signal. Since the input level of the low-bit-rate digital television signal is the same, the peak level of the low-bit-rate digital television signal is higher than the level of the high-bit-rate digital television signal when input into the mixer 23.

Reception of the low-bit-rate digital television signal increases the level of the low-bit-rate digital television signal leaking through the mixer 23 into the local oscillator 24, so that the frequency of the local oscillation signal varies greatly. This results in worsening of phase noise in the local oscillation signal, causing bit errors.

Accordingly, it is an object of the present invention to provide a digital television signal receiving tuner that eliminates bit errors by minimizing worsening of phase noise in a local oscillation signal when a low-bit-rate digital television signal is received.

To this end, according to the present invention which is defined in claim 1, there is provided a digital television signal receiving tuner including a mixer, to which a received digital television signal is input, for frequency-converting the received digital television signal and outputting an intermediate frequency signal, and a local oscillator for inputting a local oscillation signal to the mixer. When the received digital television signal contains a first digital television signal whose bit rate is lower than a predetermined bit rate and a second digital television signal whose bit rate is higher than the predetermined bit rate, the levels of the first and second digital television signals input to the mixer are set to differ so that the level of the first digital television signal input to the mixer is lower than the level of the second digital television signal input to the mixer.

Preferably, the digital television signal receiving tuner further includes a first variable attenuator, to which an automatic gain control voltage corresponding to the level of the received digital television signal is applied, for attenuating the level of the received digital television signal and inputting the signal to the mixer. For the same automatic gain control voltage, the attenuation of the first digital television signal by the first variable attenuator is greater than the attenuation of the second digital television signal by the first variable attenuator.

The first variable attenuator may include a plurality of first PIN diodes connected in series. An electric current based on the automatic gain control voltage flows through each of the PIN diodes. When the first digital television signal is received, the first digital television signal passes through all the PIN diodes and is input to the mixer. When the second digital television signal is received, the second digital television signal passes some of the PIN diodes and is input to the mixer.

Preferably, the digital television signal receiving tuner further includes a demodulator for demodulating the intermediate frequency signal output from the mixer, and a second variable attenuator, to which the automatic gain control voltage corresponding to the level of the received digital television signal is applied, for attenuating the intermediate frequency signal output from the mixer and inputting the signal to the demodulator. For the same automatic gain control voltage, the attenuation by the second variable attenuator upon reception of the first digital television signal is less than the attenuation by the second attenuator upon reception of the second digital television signal. Therefore, the levels of the intermediate frequency signals based on the first and second digital television signals, which are input to the demodulator, are approximately the same.

The second variable attenuator may include a plurality of second PIN diodes connected in series. An electric current based on the automatic gain control voltage flows through each of the PIN diodes. When the first digital television signal is received, the intermediate frequency signal based on the first digital television signal, which is output from the mixer, passes through some of the PIN diodes and is input to the demodulator. When the second digital television signal is received, the intermediate frequency signal based on the second digital television signal, which is output from the mixer, passes through all the PIN diodes and is input to the demodulator.

According to the present invention, the digital television signal receiving tuner minimizes worsening of phase noise in the local oscillation signal when a low-bit-rate digital television signal is received, thus eliminating bit errors. Although the AGC voltage applied to the first variable attenuator is the same for the first and second digital television signals, the first digital television signal is attenuated to a large extent and the second digital television signal to a lesser extent exclusively by the first variable attenuator. In accordance with the first or the second digital television signal, the number of PIN diodes through which the received digital television signal passes is increased or decreased, and the attenuation is easily varied thereby. The output from the demodulator is maintained constant. In accordance with the first or the second digital television signal, the number of PIN diodes through which the first IF signal input to the demodulator, which is based on the first digital television signal, and the second IF signal input to the demodulator, which is based on the second digital television signal, is increased or decreased. The attenuation is easily varied, so that the first IF signal is adjusted to substantially the same level as the second IF signal.

Embodiments of the present invention will now be described, by way of example only, with reference to the accompanying schematic drawings, in which:
Fig. 1 is a circuit diagram of a digital television signal receiving tuner according to an embodiment of the present invention; and
Fig. 2 is a circuit diagram of a conventional digital television signal receiving tuner.

Referring to Fig. 1, a construction and an operation of a digital television signal receiving tuner according to an embodiment of the present invention is described. A digital television signal received by an outdoor parabolic antenna (not shown) is frequency-converted by a converter (not shown) installed outside, which in turn is input into the digital television signal receiving tuner.

There are two types of digital television signals which may be transmitted. One is a low-bit-rate digital television signal (for example, the bit rate is not more than 40 Mbps) and the other is a high-bit-rate digital television signal (for example, the bit rate is not less than 40 Mbps).

It is the transmitter which determines whether the digital television signal to be transmitted is a low-bit-rate digital television signal or a high-bit-rate digital television signal.

The digital television signal input to the digital television signal receiving tuner is amplified by an amplifier 1 and input through a first variable attenuator 2 into a mixer 3.

The first variable attenuator 2 includes a first PIN diode 4, a second PIN diode 5, a third PIN diode 6, and a switching unit 7. The first PIN diode 4 and the second PIN diode 5 are connected in series. Connection of the third PIN diode 6 to the second PIN diode 5 is switched on/off by the switching unit 7.

The digital television signal amplified by the amplifier 1 is input to the first PIN diode 4. When the third PIN diode 6 is connected to the second PIN diode 5, the signal is output from the third PIN diode 6 and is input to the mixer 3. When the third PIN diode 6 is not connected to the second PIN diode 5, the signal is output from the second PIN diode 5 and is input to the mixer 3.

The first, second, third PIN diodes 4, 5, and 6 are so connected that the PN junctions are in the same direction. An automatic gain control voltage (hereinafter referred to as an "AGC voltage") VAGC output by a demodulator 8 (described hereinafter) is applied to the PIN diodes 4, 5, and 6 so as to control the attenuation.

The first switching unit 7 is switch-controlled by a switch controller 9. When the received digital television signal is a low-bit-rate television signal, i.e., a first digital television signal, the switch controller 9 switch-controls the switching unit 7 so that the second PIN diode 5 is connected to the third PIN diode 6. When the received digital television signal is a high-bit-rate television signal, i.e., a second digital television signal, the switch controller 9 switch-controls the switching unit 7 so that the connection between the second PIN diode 5 and the third PIN diode 6 is broken.

The first digital television signal passes through the first, second, and third PIN diodes 4, 5, and 6 while being attenuated to a large extent, which in turn is input into the mixer 3. The second digital television signal passes through only the first and second PIN diodes 4 and 5 while being attenuated to a lesser extent, which in turn is input into the mixer 3.

The first digital television signal input to the mixer 3 is mixed with a local oscillation signal from a local oscillator 10 to be frequency-converted into an intermediate frequency signal (hereinafter referred to as a "first IF signal") based on the first digital television signal, and is output. The second digital television signal input to the mixer 3 is mixed with a local oscillation signal from a local oscillator 10 to be frequency-converted into an intermediate frequency signal (hereinafter referred to as a "second IF signal") based on the second digital television signal, and is output.

The first digital television signal is attenuated to a large extent and is input into the mixer 3, reducing the level of the signal leaking to the local oscillator 10.

Thus, worsening of phase noise in the local oscillation signal is minimized, and hence bit errors are eliminated.

The first IF signal or the second IF signal is input through a second variable attenuator 11 into the demodulator 8 (described hereinafter).

The second variable attenuator 11 includes a fourth PIN diode 12, a fifth PIN diode 13, a sixth PIN diode 14, and a second switching unit 15. The fourth PIN diode 12 and the fifth PIN diode 13 are connected in series. Connection of the sixth PIN diode 14 to the fifth PIN diode 13 is switched on/off by the switching unit 15.

The first IF signal or the second IF signal output from the mixer 3 is input into the fourth diode 12. When the sixth PIN diode 14 is connected to the fifth PIN diode 13, the IF signal is output from the sixth PIN diode 14 and is input into the demodulator 8. When the sixth PIN diode 14 is not connected to the fifth PIN diode 13, the IF signal is output from the fifth PIN diode 13 and is input into the demodulator 8.

The AGC voltage VAGC output by the demodulator 8 is applied to the PIN diodes 12, 13, and 14 so as to control the attenuation.

The second switching unit 15 operatively connected to the first switching unit 7 is switch-controlled by the switch controller 9. When the received digital television signal is the second digital signal, the switch controller 9 switch-controls the second switching unit 15 so that the fifth PIN diode 13 and the sixth PIN diode 14 are connected. When the received digital television signal is the first digital television signal, the switch controller 9 switch-controls the second switching unit 15 so that the connection between the fifth PIN diode 13 and the sixth PIN diode 14 is broken.

The first IF signal passes through only the fourth and fifth PIN diodes 12 and 13 while being attenuated to a lesser extent, which in turn is input into the demodulator 8. The second IF signal passes through the fourth, fifth, and sixth PIN diodes 12, 13, and 14 while being attenuated to a large extent, which in turn is input into the demodulator 8.

When the first digital television signal is received, the first variable attenuator 2 attenuates the signal to a large extent and the second variable attenuator 11 attenuates the signal to a lesser extent. When the second digital television signal is received, the first variable attenuator 2 attenuates the signal to a lesser extent and the second variable attenuator 11 attenuates the signal to a large extent. As a result, the first IF signal input into the demodulator 8 is set to approximately the same level as the second IF signal input into the demodulator 8.

The first IF signal or the second IF signal input into the demodulator 8 is demodulated to output base band signals (I signal and Q signal). Simultaneously, the demodulator 8 outputs the AGC voltage VAGC corresponding to the level of the input IF signal, which in turn is applied to the first variable attenuator 2 and the second variable attenuator 11.

Because the level of the first IF signal input to the demodulator 8 is substantially the same as the level of the second IF signal input into the demodulator 8, the output from the demodulator 8 is maintained constant.

## Claims

1. A digital television signal receiving tuner comprising:
a mixer (3) to which a received digital television signal is input, said mixer frequency-converting the received digital television signal and outputting an intermediate frequency signal; and
a local oscillator (10) for inputting a local oscillation signal to said mixer (3);
signal attenuating means (2, 11) responsive to the bit-rate of the received digital television signal
wherein, when the bit rate of a first digital television signal contained in the received digital signal is lower than a predetermined bit rate and the bit rate of a second digital television signal contained in the received digital signal is higher than the predetermined bit rate, the signal attenuating means making the level of the first digital television signal input to said mixer (3) to be lower than the level of the second digital television signal input to said mixer (3).

2. A digital television signal receiving tuner according to Claim 1, the attenuating means further comprising :
a first variable attenuator (2) to which an automatic gain control voltage corresponding to the level of the received digital television signal is applied, said first variable attenuator (2) attenuating the level of the received digital television signal and inputting the signal to said mixer (3),
wherein, for the same automatic gain control voltage, the attenuation of the first digital television signal by said first variable attenuator (2) is greater than the attenuation of the second digital television signal by said first variable attenuator.

3. A digital television signal receiving tuner according to Claim 2, wherein:
said first variable attenuator includes a plurality of first PIN diodes (4, 5, 6) connected in series;
an electric current based on the automatic gain control voltage flows through each of the PIN diodes;
when the first digital television signal is received, the first digital television signal passes through all the PIN diodes (4, 5, 6) and is input to said mixer (3); and
when the second digital television signal is received, the second digital television signal passes through some of the PIN diodes (4, 5) and is input to said mixer (3).

4. A digital television signal receiving tuner according to Claim 2, further comprising:
a demodulator (8) for demodulating the intermediate frequency signal output from said mixer; and
a second variable attenuator (11) to which the automatic gain control voltage corresponding to the level of the received digital television signal is applied, said second variable attenuator (11) attenuating the intermediate frequency signal output from said mixer (3) and inputting the signal to the demodulator (8);
wherein, for the same automatic gain control voltage, the attenuation by said second variable attenuator (11) upon reception of the first digital television signal is less than the attenuation by said second variable attenuator upon reception of the second digital television signal, so that the levels of the intermediate frequency signals based on the first and second digital television signals, which are input to the demodulator (8), are approximately the same.

5. A digital television signal receiving tuner according to Claim 4, wherein:
said second variable attenuator (11) includes a plurality of second PIN diodes (12, 13, 14) connected in series;
an electric current based on the automatic gain control voltage flows through each of the PIN diodes;
when the first digital television signal is received, the intermediate frequency signal based on the first digital television signal, which is output from said mixer (3), passes through some of the PIN diodes (12, 13) and is input to the demodulator; and
when the second digital television signal is received, the intermediate frequency signal based on the second digital television signal, which is output from said mixer (3), passes through all the PIN diodes (12, 13, 14) and is input to the demodulator (8).

## Patentansprüche

1. Digitaler Fernsehsignal-Empfangstuner, umfassend:
einen Mischer (3), in den ein empfangenes digitales Fernsehsignal eingegeben wird, und der eine Frequenzumwandlung des empfangenen digitalen Fernsehsignals vornimmt und ein Zwischenfrequenzsignal ausgibt; und
einen Empfangsoszillator (10) zum Eingeben eines Empfangsoszillatorsignals in den Mischer (3):
eine Signaldämpfungseinrichtung (2, 11), die auf die Bitrate des empfangenen digitalen Fernsehsignals anspricht,
wobei dann, wenn die Bitrate eines ersten digitalen Fernsehsignals, welches in dem empfangenen digitalen Signal enthalten ist, kleiner als eine vorbestimmte Bitrate ist, und die Bitrate eines zweiten digitalen Fernsehsignals, das in dem empfangenen digitalen Signal enthalten ist, größer als die vorbestimmte Bitrate ist, die Signaldämpfungseinrichtung den Pegel des ersten digitalen Fernsehsignals, welches in den Mischer (3) eingegeben wird, kleiner macht als den Pegel des zweiten digitalen Fernsehsignals, das in den Mischer (3) eingegeben wird.

2. Digitaler Fernsehsignal-Empfangstuner nach Anspruch 1, bei dem die Dämpfungseinrichtung weiterhin aufweist:
ein erstes veränderliches Dämpfungsglied (2), dem eine automatische Verstärkungsregelspannung entsprechend dem Pegel des empfangenen digitalen Fernsehsignals zugeführt wird, und das den Pegel des empfangenen digitalen Fernsehsignals dämpft und das Signal in den Mischer (3) eingibt,
wobei für gleiche automatische Verstärkungsregelspannung die Dämpfung des ersten digitalen Fernsehsignals durch das erste veränderliche Dämpfungsglied (2) größer ist als die Dämpfung des zweiten digitalen Fernsehsignals durch das erste veränderliche Dämpfungsglied.

3. Digitaler Fernsehsignal-Empfangstuner nach Anspruch 2, bei dem:
das erste veränderliche Dämpfungsglied eine Mehrzahl erster PIN-Dioden (4, 5, 6) in Serienschaltung enthält;
ein elektrischer Strom basierend auf der automatischen Verstärkungsregelspannung durch jede der PIN-Dioden fließt;
wenn das erste digitale Fernsehsignal empfangen wird, dieses durch sämtliche PIN-Dioden (4, 5, 6) läuft und in den Mischer (3) eingegeben wird; und wenn das zweite digitale Fernsehsignal empfangen wird, dieses durch einige der PiN-Dioden (4, 5) und in den Mischer (3) eingegeben wird.

4. Digitaler Fernsehsignal-Empfangstuner nach Anspruch 2, weiterhin umfassend:
einen Demodulator (8) zum Demodulieren des von dem Mischer ausgegebenen Zwischenfrequenzsignals; und
ein zweites veränderliches Dämpfungsglied (11), dem die automatische Verstärkungsregelspannung entsprechend dem Pegel des empfangenen digitalen Fernsehsignals zugeführt wird, und der das Zwischenfrequenzsignal, welches von dem Mischer (3) ausgegeben wird, dämpft und das Signal in den Demodulator (8) eingibt,
wobei für gleiche automatische Verstärkungsregelspannung die Dämpfung durch das zweite veränderliche Dämpfungsglied (11) bei Empfang des ersten digitalen Fernsehsignals geringer ist als die Dämpfung durch das zweite veränderliche Dämpfungsglied bei Empfang des zweiten digitalen Fernsehsignals, so dass die Pegel der Zwischenfrequenzsignale basierend auf dem ersten und dem zweiten digitalen Fernsehsignal, die in den Demodulator (8) eingegeben werden, etwa gleich sind.

5. Digitaler Fernsehsignal-Empfangstuner nach Anspruch 4, bei dem:
das zweite veränderliche Dämpfungsglied (11) eine Mehrzahl zweiter PIN-Dioden (12, 13, 14) in Serienschaltung enthält;
ein elektrischer Strom basierend auf der automatischen Verstärkungsregelspannung durch jede der PIN-Dioden fließt;
wenn das erste digitale Fernsehsignal empfangen wird, das Zwischenfrequenzsignal basierend auf dem ersten digitalen Fernsehsignal, welches von dem Mischer (3) ausgegeben wird, durch einige der PIN-Dioden (12, 13) läuft und in den Demodulator eingegeben wird; und
wenn das zweite digitale Fernsehsignal empfangen wird, das Zwischenfrequenzsignal basierend auf dem zweiten digitalen Fernsehsignal, welches von dem Mischer (3) ausgegeben wird, durch sämtliche PIN-Dioden (12, 13, 14) läuft und in den Demodulator eingegeben wird.

## Revendications

1. Syntoniseur recevant des signaux de télévision numérique, comprenant :
un mélangeur (3) dans lequel entre un signal de télévision numérique reçu, ledit mélangeur convertissant en fréquence le signal de télévision numérique reçu et délivrant un signal de fréquence intermédiaire ; et
un oscillateur local (10) permettant l'entrée d'un signal d'oscillation local dans ledit mélangeur (3) ;
des moyens d'atténuation de signaux (2, 11) sensibles au débit binaire du signal de télévision numérique reçu ;
dans lequel, lorsque le débit binaire d'un premier signal de télévision numérique contenu dans le signal numérique reçu est inférieur à un débit binaire prédéterminé, et que le débit binaire d'un deuxième signal de télévision numérique contenu dans le signal numérique reçu est supérieur au débit binaire prédéterminé, les moyens d'atténuation de signaux font en sorte que le niveau du premier signal de télévision numérique entrant dans ledit mélangeur (3) soit inférieur au niveau du deuxième signal de télévision numérique entrant dans ledit mélangeur (3).

2. Syntoniseur recevant des signaux de télévision numérique selon la revendication 1, dans lequel les moyens d'atténuation de signaux comprennent en outre :
un premier atténuateur variable (2) auquel est appliquée une tension de commande automatique du gain correspondant au niveau du signal de télévision numérique reçu, ledit premier atténuateur variable (2) atténuant le niveau du signal de télévision numérique reçu et faisant entrer le signal dans ledit mélangeur (3),
dans lequel, pour la même tension de commande automatique du gain, l'atténuation du premier signal de télévision numérique par ledit premier atténuateur variable (2) est supérieure à l'atténuation du deuxième signal de télévision numérique par ledit premier atténuateur variable.

3. Syntoniseur recevant des signaux de télévision numérique selon la revendication 2, dans lequel :
ledit premier atténuateur variable inclut une pluralité de premières diodes PIN (4, 5, 6) connectées en série ;
un courant électrique basé sur la tension de commande automatique du gain circule au travers de chacune des diodes PIN ;
lorsque le premier signal de télévision numérique est reçu, le premier signal de télévision numérique passe par toutes les diodes PIN (4, 5, 6) et entre dans ledit mélangeur (3) ; et
lorsque le deuxième signal de télévision numérique est reçu, le deuxième signal de télévision numérique passe au travers certaines des diodes PIN (4, 5) et entre dans ledit mélangeur (3).

4. Syntoniseur recevant des signaux de télévision numérique selon la revendication 2, comprenant en outre :
un démodulateur (8) permettant de démoduler le signal de fréquence intermédiaire sortant dudit mélangeur ; et
un deuxième atténuateur variable (11) auquel est appliquée la tension de commande automatique du gain correspondant au niveau du signal de télévision numérique reçu, ledit deuxième atténuateur variable (11) atténuant le signal de fréquence intermédiaire délivré par ledit mélangeur (3) et faisant entrer le signal dans le démodulateur (8),
dans lequel, pour la même tension de commande automatique du gain, l'atténuation par ledit deuxième atténuateur variable (11) lors de la réception du premier signal de télévision numérique est inférieure à l'atténuation par ledit deuxième atténuateur variable lors de la réception du deuxième signal de télévision numérique, de telle sorte que les niveaux des signaux de fréquence intermédiaire basés sur les premier et deuxième signaux de télévision numérique, qui entrent dans le démodulateur (8), sont approximativement identiques.

5. Syntoniseur recevant des signaux de télévision numérique selon la revendication 4, dans lequel :
ledit deuxième atténuateur variable (11) inclut une pluralité de deuxièmes diodes PIN (12, 13, 14) connectées en série ;
un courant électrique basé sur la tension de commande automatique du gain circule au travers de chacune des diodes PIN ;
lorsque le premier signal de télévision numérique est reçu, le signal de fréquence intermédiaire basé sur le premier signal de télévision numérique, qui est délivré par ledit mélangeur (3), passe au travers de certaines des diodes PIN (12, 13) et entre dans le démodulateur ; et
lorsque le deuxième signal de télévision numérique est reçu, le signal de fréquence intermédiaire basé sur le deuxième signal de télévision numérique, qui est délivré par ledit mélangeur (3), passe au travers de toutes les diodes PIN (12, 13, 14) et entre dans le démodulateur (8).
